# EUROPÄISCHE PATENTSCHRIFT

(11) **EP 3 172 882 B1**
(45) Veröffentlichungstag und Bekanntmachung des Hinweises auf die Patenterteilung: **01.04.2020**
(21) Anmeldenummer: 15724518.4
(22) Anmeldetag: 22.05.2015
(51) Int. Cl.: H04L 29/06, H04W 4/40, H04W 4/80, H04W 12/00, H04W 12/08, G06F 21/62, H04W 76/14, H04W 84/12, H04L 29/08, G08C 17/02, H04W 76/10

(54) **AUFBAU EINER DRAHTLOSEN VERBINDUNG ZU EINEM FAHRZEUG**
ESTABLISHING A WIRELESS CONNECTION TO A VEHICLE
ÉTABLISSEMENT D'UNE CONNEXION SANS FIL AVEC UN VÉHICULE

(30) Priorität: 21.07.2014 DE 102014010752
(43) Veröffentlichungstag der Anmeldung: 31.05.2017
(73) Patentinhaber: WABCO GmbH, 30453 Hannover (DE)
(72) Erfinder: DIECKMANN, Thomas, 30982 Pattensen (DE); MERTEN, Heiner, 31188 Holle (DE); WOLF, Thomas, 30890 Barsinghausen (DE)
(74) Vertreter: Lauerwald, Jörg
(86) Internationale Anmeldenummer: PCT/EP2015/001047
(87) Internationale Veröffentlichungsnummer: WO 2016/012064

(56) Entgegenhaltungen:
- EP-A2- 1 492 302
- WO-A1-2011/053357
- DE-A1-102012 101 836
- DE-A1-102013 006 087

## Beschreibung

Die Erfindung betrifft ein Verfahren zum Aufbau einer drahtlosen Verbindung zwischen einem mobilen Kommunikationsgerät einerseits und einem Kommunikationsmodul eines Fahrzeugs mit Kennzeichen andererseits. Außerdem betrifft die Erfindung ein Steuergerät für ein Fahrzeug.

In einem Fahrzeug anfallende Daten sollen durch einen Benutzer außerhalb des Fahrzeugs abfragbar sein. Vorzugsweise soll auch eine Fernsteuerung von Fahrzeug-Funktionen durch einen Benutzer außerhalb des Fahrzeugs möglich sein. Der Benutzer hat hierfür ein mobiles Kommunikationsgerät zur Verfügung, beispielsweise ein Smartphone oder ein anderes Mobiltelefon. Das mobile Kommunikationsgerät kommuniziert drahtlos mit einem Kommunikationsmodul im Fahrzeug. Letzteres dient als Schnittstelle zu Steuergeräten im Fahrzeug und ist Teil eines Steuergerätes oder mit einem Steuergerät verbunden. Bei dem Steuergerät handelt es sich insbesondere um ein Bremsen-Steuergerät, welches an ein fahrzeugeigenes Datenbussystem (CAN-Bus oder andere) angeschlossen ist und mit dem Funktionen im Fahrzeug steuerbar sind. Dabei empfängt das Steuergerät Daten von zugeordneten Sensoren oder über den fahrzeugeigenen Datenbus.

Nur ausgewählte und eindeutig identifizierbare Benutzer sollen sich über das mobile Kommunikationsgerät mit dem Kommunikationsmodul des Fahrzeugs verbinden können. Eine Authentifizierung ist erforderlich. Möglich ist dies beispielsweise dadurch, dass das Kommunikationsmodul des Fahrzeugs als Access Point (Server) für ein lokales Funknetz (WLAN, Standard IEEE-802.11) arbeitet. Der Benutzer kann sich mit einem WLAN-fähigen Mobiltelefon in das lokale Funknetz einwählen, sofern er die für den Aufbau der Verbindung erforderlichen Daten kennt oder sogar bereits in seinem Mobiltelefon abgespeichert hat.

Auf einem Betriebshof mit mehreren Fahrzeugen werden diese nach und nach von verschiedenen Benutzern angesprochen, so dass die für den Aufbau der Funkverbindung erforderlichen Daten in verschiedenen Mobiltelefonen verbleiben. Nach und nach kann sich ein Benutzer mit seinem Mobiltelefon mit den Kommunikationsmodulen verschiedener Fahrzeuge verbinden. Dabei können leicht Irrtümer über die gerade bestehende Verbindung zu einem bestimmten Fahrzeug auftreten. Im Zusammenhang mit der Fernsteuerung von Funktionen des Fahrzeugs können so bedeutende Schäden entstehen.

Der Zugriff auf das Kommunikationsmodul eines bestimmten Fahrzeugs soll möglichst leicht konfigurierbar sein. So kann es sinnvoll sein, bestimmte Verbindungen nur zu bestimmten Tageszeiten oder an bestimmten Wochentagen zuzulassen. Auch soll eine eindeutige und für den Benutzer nachvollziehbare Zuordnung zwischen dem Fahrzeug auf der einen Seite und dem mobilen Kommunikationsgerät auf der anderen Seite gegeben sein. Schließlich soll der Aufbau der Verbindung für den Benutzer möglichst einfach sein.

Die Schrift WO 2011/053357 A1 offenbart ein Zugangskontrollsystem für ein Fahrzeug. Die Schrift DE 10 2012 101 836 A1 offenbart eine Vorrichtung und ein Verfahren zu einer zusätzlichen elektronischen Wegfahrsperre mit Türöffner- und Diebstahlalarmfunktion für ein Fahrzeug. Das Dokument DE 10 2013 006 087 A1 offenbart ein Verfahren zum Einstellen von fahrer- und kraftfahrzeugspezifischen Konfigurationsparametern in einem Kraftfahrzeug gemäß einem Nutzerprofil mittels eines mobilen Kommunikationsendgerätes.

Das erfindungsgemäße Verfahren weist die Merkmale des Anspruchs 1 auf:
a) auf einem (Daten-)Server außerhalb des mobilen Kommunikationsgerätes sind Zugriffsrechte abgelegt, nämlich Verknüpfungen zwischen Fahrzeug-Kennzeichen einerseits und Benutzer-Kennzeichen andererseits, sowie zum Aufbau der drahtlosen Verbindung erforderliche Daten,
b) mit dem mobilen Kommunikationsgerät wird das Kennzeichen des Fahrzeugs erfasst,
c) im mobilen Kommunikationsgerät liegt das Benutzer-Kennzeichen vor,
d) das mobile Kommunikationsgerät sendet das erfasste Fahrzeug-Kennzeichen und das Benutzer-Kennzeichen an den Server,
e) der Server prüft, ob für die übersandte Kombination von Kennzeichen Zugriffsrechte vorliegen,
f) sofern Zugriffsrechte vorliegen, sendet der Server die für den Aufbau der drahtlosen Verbindung erforderlichen Daten an das mobile Kommunikationsgerät,
g) das mobile Kommunikationsgerät stellt mit den vom Server übersandten Daten eine drahtlose Verbindung zum Kommunikationsmodul des Fahrzeugs her.

Das mobile Kommunikationsgerät weist die für die Durchführung des Verfahrens erforderlichen Eigenschaften auf, nämlich Hardware und Software zur Erfassung des Fahrzeug-Kennzeichens, Hardware und Software zum Aufbau einer Verbindung mit dem Server sowie Hardware und Software zum Aufbau einer drahtlosen Verbindung mit dem Kommunikationsmodul des Fahrzeugs.

Im Server sind als Datensätze Kombinationen von Fahrzeug-Kennzeichen mit Benutzer-Kennzeichen sowie die Zugangsdaten für die Kommunikation mit dem Fahrzeug abgelegt. Sofern die angefragte Kombination nicht abgelegt ist, kommt keine Verbindung zwischen mobilem Kommunikationsgerät und Kommunikationsmodul des Fahrzeugs zustande. Zusätzlich zu den genannten Daten können weitere Angaben hinterlegt sein, etwa Beschränkungen bezogen auf das Fahrzeug-Kennzeichen und/oder das Benutzer-Kennzeichen. So kann es sinnvoll sein, Verbindungen für bestimmte Benutzer und/oder bestimmte Fahrzeuge nur zu bestimmten Zeiten zuzulassen, etwa bestimmte Benutzer nur während üblicher Arbeitszeiten und bestimmte Fahrzeuge nicht an Sonn- und Feiertagen.

Der Server kann vom Betreiber eines Fuhrparks konfiguriert werden. Fahrzeug-Kennzeichen, Benutzer-Kennzeichen, Verbindungsdaten und Beschränkungen können so zentral verwaltet, angepasst und aktualisiert werden.

Nach einem weiteren Gedanken der Erfindung werden als Fahrzeug-Kennzeichen ein Nummernschild, eine Fahrgestell-Nummer, ein optisches Muster, per RFID (Radio Frequency Identification) übertragbare Daten oder per NFC (Near Field Communication) übertragbare Daten verwendet. Bevorzugt wird das sogenannte Nummernschild vom mobilen Kommunikationsgerät gelesen. Die Aufschrift auf dem Nummernschild wird umgangssprachlich auch als Fahrzeug-Kennzeichen bezeichnet. Tatsächlich kann das Fahrzeug-Kennzeichen hier auch andere Daten enthalten oder anderer Art sein. Wichtig ist, dass das Kennzeichen eine eindeutige Zuordnung zum Fahrzeug ermöglicht. Hierzu kann auch ein QR-Code als optisches Muster oder ein Funketikett mit per RFID übertragbaren Daten dienen. Auch kann ein Fahrzeug-Kennzeichen im Kommunikationsmodul abgelegt und per NFC auslesbar sein.

Nach einem weiteren Gedanken der Erfindung ist vorgesehen, dass das mobile Kommunikationsgerät die das Fahrzeug-Kennzeichen repräsentierenden Daten als optisches Muster ausliest oder per Funk. Das optische Muster ist beispielsweise durch eine dem mobilen Kommunikationsgerät zugeordnete Kamera erfassbar und von einer hierfür vorgesehenen Software in geeignete Daten umwandelbar.

Nach einem weiteren Gedanken der Erfindung besteht das Benutzer-Kennzeichen aus Daten, die im mobilen Kommunikationsgerät gespeichert sind oder vom Benutzer in das mobile Kommunikationsgerät eingegeben werden. Es kann sich um eine Geräte-ID handeln, um eine SIM-Kartennummer oder um eine in einer Datei des mobilen Kommunikationsgerätes abgelegte Nummer. Auch kann der Benutzer im Notfall ein Kennzeichen in das mobile Kommunikationsgerät eintippen.

Nach einem weiteren Gedanken der Erfindung ist vorgesehen, dass das mobile Kommunikationsgerät die beiden Kennzeichen (Fahrzeug-Kennzeichen und Benutzer-Kennzeichen) an eine mit dem Server verbundene Schnittstelle per Mobilfunk oder per WLAN übersendet. Der Server ist vorzugsweise über das Internet oder ein anderes Netzwerk adressierbar. Die mit dem Server verbundene Schnittstelle ermöglicht den drahtlosen Zugang zum Server per Mobilfunk oder per WLAN. Dabei können Server und Schnittstelle räumlich weit auseinander liegen.

Nach einem weiteren Gedanken der Erfindung ist die drahtlose Verbindung vom mobilen Kommunikationsgerät zum Kommunikationsmodul des Fahrzeugs eine Verbindung per WLAN oder Bluetooth. Auch eine andere digitale Funktechnik mit der Möglichkeit einer verschlüsselten Verbindung kann zur Anwendung kommen. Das Kommunikationsmodul soll insbesondere als Access Point oder in einer ähnlichen Funktion durch das mobile Kommunikationsgerät adressierbar sein.

Nach einem weiteren Gedanken der Erfindung ist vorgesehen, dass als mobiles Kommunikationsgerät ein Mobiltelefon mit WLAN-Funktion und/oder Bluetooth-Funktion verwendet wird. Vorzugsweise handelt es sich bei dem Mobiltelefon um ein Smartphone mit einer sogenannten App als Software für das Erfassen des Fahrzeug-Kennzeichens, den Aufbau der Verbindungen, die Anzeige von Fahrzeug-Informationen und/oder die Fernsteuerung von Fahrzeug-Funktionen. Das Mobiltelefon weist vorzugsweise eine Kamera auf, mit der das Fahrzeug-Kennzeichen lesbar ist. Die Software liest aus dem aufgenommenen Kamerabild das Fahrzeug-Kennzeichen und erzeugt daraus die an den Server zu übersendenden Daten, welche außerdem Informationen über das Benutzer-Kennzeichen enthalten.

Nach einem weiteren Gedanken der Erfindung ist vorgesehen, dass das Fahrzeug nach Aufbau der drahtlosen Verbindung zwischen mobilem Kommunikationsgerät und Kommunikationsmodul ein optisch oder akustisch wahrnehmbares Signal abgibt, etwa einen Lampenblink-Code oder ein Hup-Signal. Auch kann auf einem Bildschirm des mobilen Kommunikationsgerätes ein Signal zur Bestätigung der bestehenden Verbindung angezeigt sein, zusätzlich oder alternativ zu einem Tonsignal.

Gegenstand der Erfindung ist auch ein Steuergerät für ein Fahrzeug, insbesondere für ein elektronisches Bremssystem, mit einem Kommunikationsmodul und zur Verwendung in einem erfindungsgemäßen Verfahren. Das Kommunikationsmodul ist Bestandteil des Steuergerätes oder mit dem Steuergerät zumindest über eine Datenleitung verbunden. Das Steuergerät ist vorzugsweise an das fahrzeugeigene Datenbussystem (CAN-Bus) angeschlossen und kann so mit anderen Steuergeräten im Fahrzeug kommunizieren.

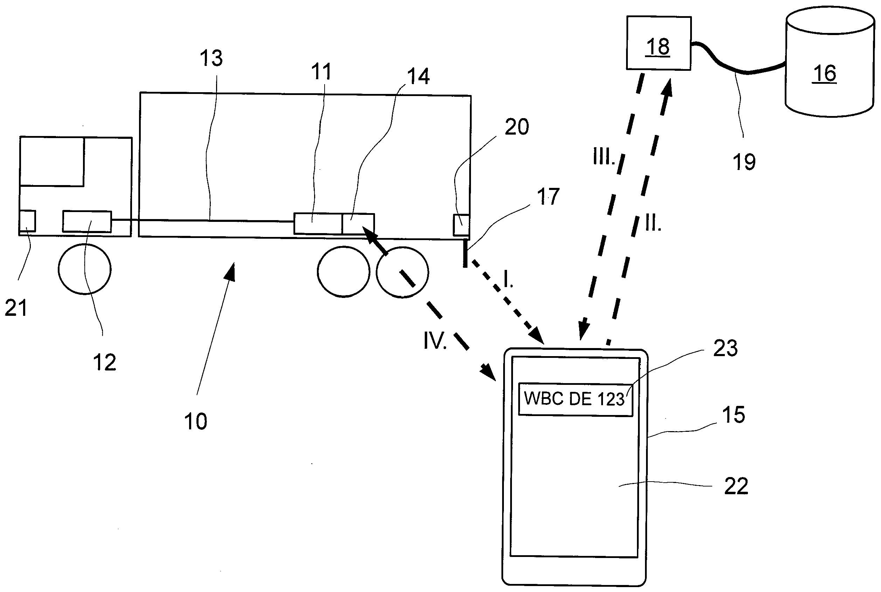

Weitere Merkmale der Erfindung ergeben sich aus der Beschreibung im Übrigen und aus den Ansprüchen. Vorteilhafte Ausführungsformen der Erfindung werden nachfolgend anhand der Zeichnung näher erläutert:
Ein Fahrzeug 10 ist mit einem elektronischen Bremssystem ausgestattet und weist ein Bremsen-Steuergerät 11 und ein Motor-Steuergerät 12 auf, welche an einen CAN-Bus 13 angeschlossen sind. Daneben können weitere Steuergeräte vorgesehen sein. Den Steuergeräten sind Sensoren zugeordnet, deren Daten von den Steuergeräten verarbeitet werden. Dem Bremsen-Steuergerät 11 ist hier ein Kommunikationsmodul 14 zugeordnet, mit dem eine Kommunikation per Funk, nämlich hier per WLAN möglich ist. Mittels des Kommunikationsmoduls 14 ist ein drahtloser Kontakt zum Bremsen-Steuergerät 11 und/oder zum CAN-Bus 13 möglich. Die Technik für die Verknüpfung von CAN-Netzen mit WLAN-Netzen ist bekannt. Schnittstellen hierfür stehen zur Verfügung.

Das Fahrzeug 10 ist im vorliegenden Ausführungsbeispiel ein Motorwagen. Es kann sich aber auch um ein Anhängefahrzeug handeln, im einfachen Fall auch nur mit einem Steuergerät und ohne CAN-Bus.

Ein Benutzer des Fahrzeugs 10 möchte Informationen aus dem Fahrzeug über sein Smartphone 15 abrufen und/oder Funktionen des Fahrzeugs 10 steuern. Erforderlich ist eine Verbindung mit einer eindeutigen Zuordnung zwischen Fahrzeug 10 und Smartphone 15 unter Beachtung möglicher Einschränkungen der Zugriffsrechte.

Auf einem Datenbankserver 16 sind Datensätze abgelegt, die zulässige Kombinationen von Fahrzeugen 10 mit Smartphones 15 enthalten, hier anhand eines Fahrzeug-Kennzeichens 17 (Nummernschild) auf der einen Seite und einer Geräte-nummer des Smartphones 15 auf der anderen Seite. Alternativ oder zusätzlich kann eine SIM-Kartennummer des Smartphones 15 Teil des Datensatzes sein, sowie gegebenenfalls weitere identifizierende Angaben. Schließlich kann der Datensatz noch zusätzlich zu beachtende Beschränkungen enthalten, etwa bezüglich der zulässig abrufbaren Informationen oder zulässig durchführbaren Steuerbefehle und/oder Beschränkungen hinsichtlich der Tageszeiten und Wochentage. Daneben können Datensätze vorgesehen sein, in denen auf der einen Seite das Fahrzeug-Kennzeichen 17 und auf der anderen Seite ein geräteunabhängiger Schlüssel (eine Nummer oder ein Passwort) hinterlegt sind. Zusätzlich sind auf dem Datenbankserver die für jedes Kommunikationsmodul 14 gültigen Verbindungsdaten abgelegt, die für den Aufbau einer Verbindung erforderlich sind.

Das Smartphone 15 ist mit einer nicht gezeigten Kamera ausgestattet und hat eine WLAN-Funktion. Wenn der Benutzer mit seinem Smartphone 15 Informationen aus dem Fahrzeug 10 abrufen und/oder Funktionen fernsteuern möchte, muss der nachfolgende Authentifizierungsvorgang durchlaufen werden:
Auf dem Smartphone 15 ist eine Software installiert, eine sogenannte App, die den Benutzer durch den Authentifizierungsvorgang führt und die Schritte automatisch ausführt, soweit dies möglich ist. Zunächst fordert die Software den Benutzer zum Erfassen des Fahrzeug-Kennzeichens 17 mit der Kamera des Smartphone 15 auf (Schritt I.). Das eingelesene Kennzeichen wird von der Software in eine Zeichenfolge umgewandelt und zusammen mit der Geräte-Nummer des Smartphone 15 per Mobilfunk (Schritt II.) an eine Sender-/Empfangsstation 18 und von dort per Internet (Ziffer 19) an den Server 16 übermittelt. Im Server 16 wird der übersandte Datensatz mit den vorhandenen Daten abgeglichen. Bei zulässiger Verbindung sendet der Server 16 seine Antwort (Schritt III.) an das Smartphone 15 zurück. Die Antwort des Servers 16 enthält alle für den Aufbau einer WLAN-Verbindung erforderlichen Daten, die WLAN-Netzbezeichnung (SSID), Verschlüsselungsart und Passwort. Mit den Daten baut die Software des Smartphone 15 automatisch die WLAN-Verbindung (Schritt IV.) zum Kommunikationsmodul 14 auf. Letzteres hat dabei die Funktion eines Access Points (Server) im WLAN-Netzwerk. Die WLAN-Verbindung steht nun, das Abrufen von Informationen aus dem Fahrzeug 10 und gegebenenfalls die Fernsteuerung von Funktionen sind möglich.

Zur Bestätigung der erfolgreich aufgebauten WLAN-Verbindung zum Fahrzeug kann dieses optisch oder akustisch wahrnehmbare Signale aussenden. Im vorliegenden Fall werden Blinkleuchten 20, 21 kurzzeitig aktiviert. Außerdem erscheint auf einem Bildschirm 22 des Smartphone 15 eine verbale Bestätigung, zum Beispiel eine Wiedergabe 23 des Fahrzeug-Kennzeichens 17.

Anstelle einer WLAN-Verbindung kann auch eine andere Funktechnik zum Einsatz kommen, etwa Bluetooth oder eine andere Technik, die eine insbesondere verschlüsselte Verbindung ermöglicht.

Mit dem erfindungsgemäßen Verfahren kann der Benutzer mit seinem Smartphone auf einfache Weise eine sichere und eindeutige Verbindung zu dem Steuergerät seines Fahrzeugs herstellen. Zur Authentifizierung und zur Übergabe der Verbindungsdaten wird nur eine zusätzliche Verbindung zu einem Datenbank-Server im Internet benötigt. Diese zusätzliche Verbindung wird hier per Mobilfunk (GSM, UMTS, LTE usw.) hergestellt. Möglich ist aber auch eine andere Verbindungsart, etwa per WLAN zu einem WLAN-Router in der Nähe.

## Patentansprüche

1. Verfahren zum Aufbau einer drahtlosen Verbindung zwischen einem mobilen Kommunikationsgerät (15) einerseits und einem Kommunikationsmodul (14), welches Bestandteil eines Steuergerätes(11, 12) für ein elektronisches Bremssystem eines Fahrzeugs (10) mit Kennzeichen (17) andererseits ist, aufweisend folgende Merkmale:
a) auf einem Datenbank-Server (16) außerhalb des mobilen Kommunikationsgerätes (15) sind Zugriffsrechte abgelegt, nämlich Verknüpfungen zwischen Fahrzeug-Kennzeichen (17) einerseits und Benutzer-Kennzeichen andererseits, sowie zum Aufbau der drahtlosen Verbindung erforderliche Daten,
b) mit dem mobilen Kommunikationsgerät (15) wird das Kennzeichen (17) des Fahrzeugs (10) erfasst (I.),
c) im mobilen Kommunikationsgerät (15) liegt das Benutzer-Kennzeichen vor,
d) das mobile Kommunikationsgerät (15) sendet (II.) das erfasste Fahrzeug-Kennzeichen (17) und das Benutzer-Kennzeichen an den Server (16),
e) der Server (16) prüft, ob für die übersandte Kombination von Kennzeichen Zugriffsrechte vorliegen,
f) sofern Zugriffsrechte vorliegen, sendet (III.) der Server (16) die für den Aufbau der drahtlosen Verbindung erforderlichen Daten an das mobile Kommunikationsgerät (15),
g) das mobile Kommunikationsgerät (15) stellt die drahtlose Verbindung zum Kommunikationsmodul (14) her (IV.).

2. Verfahren nach Anspruch 1, **dadurch gekennzeichnet, dass** als Fahrzeug-Kennzeichen (17) ein Nummernschild, eine Fahrgestell-Nummer, ein anderes optisches Muster, per RFID übertragbare Daten oder per NFC übertragbare Daten verwendet werden.

3. Verfahren nach Anspruch 1 oder 2, **dadurch gekennzeichnet, dass** das mobile Kommunikationsgerät die das Fahrzeug-Kennzeichen (17) repräsentierenden Daten als optisches Muster ausliest oder per Funk, insbesondere per Kurzstreckenfunk.

4. Verfahren nach Anspruch 1 oder einem der weiteren Ansprüche, **dadurch gekennzeichnet, dass** das Benutzer-Kennzeichen aus Daten besteht, die im mobilen Kommunikationsgerät (15) gespeichert sind oder vom Benutzer in das mobile Kommunikationsgerät eingegeben werden.

5. Verfahren nach Anspruch 1 oder einem der weiteren Ansprüche, **dadurch gekennzeichnet, dass** das mobile Kommunikationsgerät (15) die beiden Kennzeichen an eine mit dem Server (16) verbundene Schnittstelle (Sende-/Empfangsstation 18) per Mobilfunk oder per WLAN übersendet.

6. Verfahren nach Anspruch 1 oder einem der weiteren Ansprüche, **dadurch gekennzeichnet, dass** die drahtlose Verbindung vom mobilen Kommunikationsgerät (15) zum Kommunikationsmodul (14) eine Verbindung per WLAN oder Bluetooth ist.

7. Verfahren nach Anspruch 1 oder einem der weiteren Ansprüche, **dadurch gekennzeichnet, dass** als mobiles Kommunikationsgerät (15) ein Mobiltelefon mit WLAN-Funktion und/oder Bluetooth-Funktion verwendet wird.

8. Verfahren nach Anspruch1 oder einem der weiteren Ansprüche **dadurch gekennzeichnet, dass** das Fahrzeug (10) nach Aufbau der drahtlosen Verbindung zwischen mobilem Kommunikationsgerät (15) und Kommunikationsmodul (14) ein optisch oder akustisch wahrnehmbares Signal abgibt.

9. Steuergerät (11, 12) für ein elektronisches Bremssystem eines Fahrzeugs (10) mit einem Kommunikationsmodul (14) als Bestandteil des Steuergerätes (11, 12), wobei das Steuergerät (11, 12) konfiguriert ist zur Durchführung eines Verfahrens nach einem der voranstehenden Ansprüche.

10. Elektronisches Bremssystem eines Fahrzeuges (10), welches ein Steuergerät (11, 12) nach Anspruch 9 aufweist und wobei das elektronische Bremssystem ausgestaltet ist, ein Verfahren nach einem der Ansprüche 1 bis 8 durchzuführen.

11. System umfassend ein Steuergerät (11, 12) nach Anspruch 9, sowie ein mobiles Kommunikationsgerät (15) und einen Server (16), wobei das System ausgestaltet ist, ein Verfahren nach einem der Ansprüche 1 bis 8 auszuführen.

## Claims

1. Method for establishing a wireless connection between a mobile communication device (15) on the one hand and a communication module (14), which is part of a control unit (11, 12) for an electronic braking system of a vehicle (10) with an identifier (17), on the other hand, having the following features:
a) access rights, i.e. links between vehicle identifiers (17) on the one hand and user identifiers on the other hand, and also data required for establishing the wireless connection are stored on a (data) server (16) outside the mobile communication device (15),
b) the identifier (17) of the vehicle (10) is recorded (I.) with the mobile communication device (15),
c) the user identifier is present in the mobile communication device (15),
d) the mobile communication device (15) transmits (II.) the recorded vehicle identifier (17) and the user identifier to the server (16),
e) the server (16) checks whether access rights exist for the forwarded combination of identifiers,
f) if access rights exist, the server (16) transmits (III.) the data required for establishing the wireless connection to the mobile communication device (15),
g) the mobile communication device (15) establishes (IV.) the wireless connection to the communication module (14).

2. Method according to Claim 1, **characterized in that** a number plate, a chassis number, a different optical pattern, data transmittable via RFID or data transmittable via NFC are used as the vehicle identifier (17).

3. Method according to Claim 1 or 2, **characterized in that** the mobile communication device reads the data representing the vehicle identifier (17) as an optical pattern or via a radio link, in particular via a short-range radio link.

4. Method according to Claim 1 or one of the further claims, **characterized in that** the user identifier consists of data which are stored in the mobile communication device (15) or are input by the user into the mobile communication device.

5. Method according to Claim 1 or one of the further claims, **characterized in that** the mobile communication device (15) forwards the two identifiers via a mobile radio link or via a WLAN to an interface (transceiver station 18) connected to the server (16).

6. Method according to Claim 1 or one of the further claims, **characterized in that** the wireless connection from the mobile communication device (15) to the communication module (14) is a connection via a WLAN or Bluetooth.

7. Method according to Claim 1 or one of the further claims, **characterized in that** a mobile telephone with a WLAN function and/or Bluetooth function is used as the mobile communication device (15).

8. Method according to Claim 1 or one of the further claims, **characterized in that** the vehicle (10) emits a visually or audibly perceptible signal after establishing the wireless connection between the mobile communication device (15) and the communication module (14).

9. Control unit (11, 12) for an electronic braking system of a vehicle (10) with a communication module (14) as part of the control unit (11, 12), wherein the control unit (11, 12) is configured to perform a method according to one of the preceding claims.

10. Electronic braking system of a vehicle (10), which has a control unit (11, 12) according to Claim 9 and wherein the electronic braking system is designed to perform a method according to one of Claims 1 to 8.

11. System comprising a control unit (11, 12) according to Claim 9, and also a mobile communication device (15) and a server (16), wherein the system is designed to perform a method according to one of Claims 1 to 8.

## Revendications

1. Procédé d'établissement d'une liaison sans fil entre un appareil de communication mobile (15) d'une part et un module de communication (14), lequel fait partie intégrante d'un contrôleur (11, 12) pour un système de freinage électronique d'un véhicule (10) ayant un identificateur (17) d'autre part, présentant les caractéristiques suivantes :
a) des droits d'accès sont stockés sur un serveur de base de données (16) en-dehors de l'appareil de communication mobile (15), à savoir des liens entre l'identificateur de véhicule (17) d'une part et un identificateur d'utilisateur d'autre part, ainsi que des données nécessaires pour l'établissement de la liaison sans fil,
b) l'identificateur (17) du véhicule (10) est acquis (I.) avec l'appareil de communication mobile (15),
c) l'identificateur d'utilisateur se trouve dans l'appareil de communication mobile (15),
d) l'appareil de communication mobile (15) envoie (II.) l'identificateur de véhicule (17) et l'identificateur d'utilisateur au serveur (16),
e) le serveur (16) vérifie si les droits d'accès existent pour la combinaison d'identificateurs envoyée,
f) sous réserve de l'existence des droits d'accès, le serveur (16) envoie (III.) à l'appareil de communication mobile (15) les données nécessaires pour l'établissement de la liaison sans fil,
g) l'appareil de communication mobile (15) établit (IV.) la liaison sans fil avec le module de communication (14).

2. Procédé selon la revendication 1, **caractérisé en ce que** l'identificateur de véhicule (17) utilisé est une plaque minéralogique, un numéro de châssis, un autre modèle optique, des données pouvant être transmises par RFID ou des données pouvant être transmises par NFC.

3. Procédé selon la revendication 1 ou 2, **caractérisé en ce que** l'appareil de communication mobile délivre les données qui représentent l'identificateur de véhicule (17) sous la forme d'un modèle optique ou par radio, notamment par radiocommunication de courte portée.

4. Procédé selon la revendication 1 ou l'une des revendications supplémentaires, **caractérisé en ce que** l'identificateur d'utilisateur se compose de données qui sont enregistrées dans l'appareil de communication mobile (15) ou qui peuvent être saisies par l'utilisateur dans l'appareil de communication mobile.

5. Procédé selon la revendication 1 ou l'une des revendications supplémentaires, **caractérisé en ce que** l'appareil de communication mobile (15) envoie les deux identificateurs par radiocommunication mobile ou par WLAN à une interface (station d'émission/réception 18) reliée au serveur (16).

6. Procédé selon la revendication 1 ou l'une des revendications supplémentaires, **caractérisé en ce que** la liaison sans fil de l'appareil de communication mobile (15) au module de communication (14) est une liaison par WLAN ou Bluetooth.

7. Procédé selon la revendication 1 ou l'une des revendications supplémentaires, **caractérisé en ce que** l'appareil de communication mobile (15) utilisé est un téléphone mobile pourvu d'une fonction WLAN et/ou d'une fonction Bluetooth.

8. Procédé selon la revendication 1 ou l'une des revendications supplémentaires, **caractérisé en ce que** le véhicule (10), après l'établissement de la liaison sans fil entre l'appareil de communication mobile (15) et le module de communication (14), délivre un signal perceptible visuellement et acoustiquement.

9. Contrôleur (11, 12) pour un système de freinage électronique d'un véhicule (10) comprenant un module de communication (14) en tant que partie intégrante du contrôleur (11, 12), le contrôleur (11, 12) étant configuré pour mettre en œuvre un procédé selon l'une des revendications précédentes.

10. Système de freinage électronique d'un véhicule (10), lequel possède un contrôleur (11, 12) selon la revendication 9 et le système de freinage électronique étant configuré pour mettre en œuvre un procédé selon l'une des revendications 1 à 8.

11. Système comprenant un contrôleur (11, 12) selon la revendication 9 ainsi qu'un appareil de communication mobile (15) et un serveur (16), le système étant configuré pour mettre en œuvre un procédé selon l'une des revendications 1 à 8.
